# EUROPEAN PATENT APPLICATION

(11) **EP 1 810 993 A2**
(43) Date of publication of application: **25.07.2007**
(21) Application number: 06026489.2
(22) Date of filing: 20.12.2006
(51) Int. Cl.: C08L 67/00

(54) **Method of preparation of polyethylenetherephthalate nanocomposite fiber with enhanced modulus**

(30) Priority: 29.12.2005 KR 20050134490; 29.12.2005 KR 20050134495; 03.11.2006 KR 20060108542
(71) Applicant: Hyosung Corporation, Dongan-ku Anyang-si Kyonggi do 431-080 (KR)
(72) Inventor: Kim, Hong-Un, Dongan-ku,Anyang-si, Kyonggi-do,431-080 (KR); Bang, Yun-Hyuk, Dongan-ku,Anyang-si, Kyonggi-do,431-080 (KR); Choi, Soo-Myung, Dongan-ku,Anyang-si, Kyonggi-do,431-080 (KR)
(74) Representative: Katzameyer, Michael

(57) **Abstract**

The present invention relates to a polyethylene terephthalate nanocomposite fiber with enhanced modulus, and specifically to a technique for preparing a PET nanocomposite fiber with excellent initial and high-temperature modulus, which comprises adding 1 to 4% by weight of a compound selected from the group consisting of C₅₆H₁₂₂O₁₂Si₇, C₃₁H₇₁NO₁₂Si₈ₙ, C₅₉H₁₂₇NO₁₂Si₈, and C₃₃H₇₆N₂O₁₂Si₈, each of which is an organic/inorganic hybrid nanocompound, based on the total weight of the polymers, to prepare a polyethylene terephthalate nanocomposite chip having 85 mol% or more of the ethylene terephthalate units and an intrinsic viscosity in the range of 0.50 to 1.20, and then melt-spinning and stretching the composite chip.

## Description

### Technical Field

The present invention relates to a polyethylene terephthalate (PET) nanocomposite fiber with enhanced modulus, and specifically to a PET nanocomposite with excellent thermal stability, obtained by addition of 1 to 5% by weight of one compound selected from the group consisting of C₅₆H₁₂₂O₁₂Si₇, C₃₁H₇₁NO₁₂Si₈, C₅₉H₁₂₇NO₁₂Si₈ and C₃₃H₇₆N₂O₁₂Si₈, which are nanocompounds with excellent heat resistance, based on the total weight of the polymers, in the step of polymerization. Further, the present invention relates to a technique for preparing a PET nanocomposite fiber with excellent initial and high-temperature modulus, which comprises using a polymer of the above-described PET nanocomposite to prepare a polyethylene terephthalate nanocomposite chip with a content of the ethylene terephthalate unit of 85 mol% or more and an intrinsic viscosity in the range of 0.50 to 1.20, and then melt-spinning and stretching the composite chip.

### Background Art

A PET as a representative polyester was for the first time industrialized for fibers by ICI in 1949, and then has become one of three representative synthetic fibers, with other two synthetic fibers being nylon and acryl fibers. The PET has been rapidly developed for its excellent physical properties such as high strength, high heat resistance, transparency, gas barrierability and stretch processibility, processing characteristics, and cost-competitiveness, even in the non-fiber applications. In particular, the PET used for a tire cord is beneficial from the viewpoint of its economy and high strength, but it has disadvantages such as poor heat resistance and low water resistance. Therefore, there is currently a need of improvement on heat resistance, and reduction in the modulus at a high temperature, and increase in the temperature.

Generally, as the advantages of the PET synthesized by polycondensation of terephthalic acid and ethylene glycol, mention may be made of, firstly, excellent adhesiveness to fiber products formed from metal materials and film forming property; secondly, excellent weather resistance, thermal stability, insulating property and excellent appearance; thirdly, no harmfulness to a human body; fourthly, excellent dyeing property, anti-peeling property, or the like, and mechanical properties equivalent to those of conventional fibers. Despite its various advantages, attempts for obtain more excellent performances have been still made. One of such the attempts is that clay such as montmorillonite (MMT) is finely dispersed in a resin in order to enhance heat resistance, gas barrierability, and other mechanical properties to be equivalent to those of the plastics, whereby an excellent PET/clay nanocomposite is prepared.

The preparation of a polymeric resin/clay nanocomposite basically aims to significantly overcome the drawbacks of the composites filled with the inorganic materials, by finely dispersing the inorganic filler/reinforcement to nanometers in particle size with further modification of the transitional method involving the addition of a micron-scaled (10⁻⁶ m) reinforcement to improve the physical properties. It is one of the key techniques expected to cause great change in the market of the composite materials in the next generation, which is very beneficial in the performances versus the actual cost.

The related studies have been made in the Unite States, Japan, etc. since 1987 when a delamination phenomenon involving using an appropriate method to insert nylon monomers between silicate layers and polymerizing them between the layers, thus the distance between the layers being increased up to around 10 nm, was reported by the researchers in Toyota in Japan. However, the proposed methods could be used only in the case where cationic polymerization is allowable, and had problems that traditional industrial facilities cannot be used as they are.

In 1993, Yano, et al. in Japan proposed a method for the preparation of a polyimide/clay nanocomposite, which involves immersing an MMT (montmorillonite) treated with an organizing agent in a polymer solution such that the solvent penetrates between the silicate layers for dispersion of the silicate layers and maintains such dispersion. However, this method had problems that a large amount of the solvent is required for the preparation process; another process for removal of the solvent is required; the polymer is only simply inserted between the layers of the organized MMT, or the distance between the layers become narrower again during drying the solvent.

The nanoclay which had been employed for the conventional PETs and other polymers was treated with organic materials having at least eight alkyl groups to broaden the gap between the clay layers and provide compatibility with the polymer. The organo-treated nanoclay had a gap between the layers of at most about 3 nm and participated in the reaction by intercalation of the polymer, which thus gave limits on its use. In the case where the gap between the clay layers is exfoliated, the physical properties of the polymer can be affected to some degree. However, since the length and the width of the polymer are at least 200 nm, respectively, it exits as another compound in the fiber structure. On the other hand, in the case of a molded article, it functions to improve the barrierability, and thus has many applications. The most essential problem of the organo-treated nanoclay is that the parts organo-treated at a high temperature are mostly decomposed, and then cannot become in the state for reaction with the polymer.

As compared with these nanoclays, C₅₆H₁₂₂O₁₂Si₇, C₃₁H₇₁NO₁₂Si₈, C₅₉H₁₂₇NO₁₂Si₈ and C₃₃H₇₆N₂O₁₂Si₈, which are nanocompounds used in the present invention, are organic/inorganic hybrid nanocompounds, have their organic moieties maintained at a high temperature, and have uniform distributions, which can improve the initial and the high-temperature modulus in the PET fibers.

It is an object of the present invention to provide a PET nanocomposite with excellent thermal stability and compatibility with PET, obtained by addition of 1 to 5% by weight of one compound selected from the group consisting of C₅₆H₁₂₂O₁₂Si₇, C₃₁H₇₁NO₁₂Si₈, C₅₉H₁₂₇NO₁₂Si₈ and C₃₃H₇₆N₂O₁₂Si₈, which are each nanocompounds, based on the total weight of the polymers, in the step of polymerization, in order to solve the above-described problems.

It is another object of the present invention to provide a technique for preparing a PET nanocomposite fiber with excellent initial and high-temperature modulus, which comprises using a polymer of the above-described PET nanocomposite to prepare a polyethylene terephthalate nanocomposite chip with a content of the ethylene terephthalate unit of 85 mol% or more and an intrinsic viscosity in the range of 0.50 to 1.20, and then melt-spinning and stretching the composite chip.

### Brief Description of the Drawings

Figs. 1 are each SEM photographs of the cross-sections of the polyethylene terephthalate (hereinafter, referred to 'PET') to which C₅₆H₁₂₂O₁₂Si₇ as an organic/inorganic hybrid nanocompound is added in the amount of 1% by weight and 2% by weight, respectively, and C₃₁H₇₁NO₁₂Si₈, C₅₉H₁₂₇NO₁₂Si₈ and C₃₃H₇₆N₂O₁₂Si₈ are added in the amount of 2 % by weight.
Fig. 2 is a curve according to variation in the storage modulus of the PET nanocomposite fiber, to which C₃₁H₇₁NO₁₂Si₈, C₅₉H₁₂₇NO₁₂Si₈ and C₃₃H₇₆N₂O₁₂Si₈ are added, depending on the temperatures.
Fig. 3 illustrates a tanδ of the PET nanocomposite fiber, to which C₃₁H₇₁NO₁₂Si₈, C₅₉H₁₂₇NO₁₂Si₈ and C₃₃H₇₆N₂O₁₂Si₈ are each added.

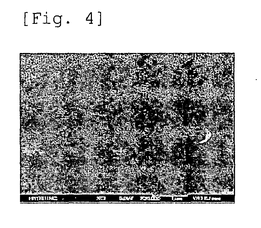

Fig. 4 is an SEM photograph of the cross-sections of the polyethylene terephthalate to which C₅₆H₁₂₂O₁₂Si₇ is added in an amount of 6% by weight.

### Disclosure of the Invention

In order to accomplish the above-described objects, the present invention provides a PET nanocomposite comprising one organic/inorganic hybrid nanocompound selected from four kinds of the organic/inorganic hybrid nanocompounds, represented by the following structural formulae I (a) to I (d):

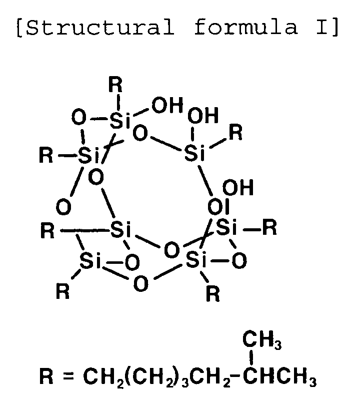

C₅₆H₁₂₂O₁₂Si₇ (a)

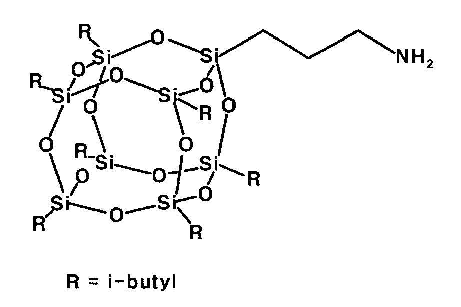

C₃₁H₇₁NO₁₂Si₈ (b)

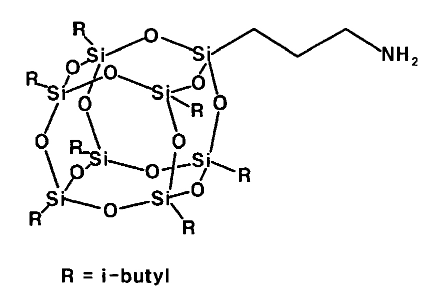

C₅₉H₁₂₇NO₁₂Si₈ (c)

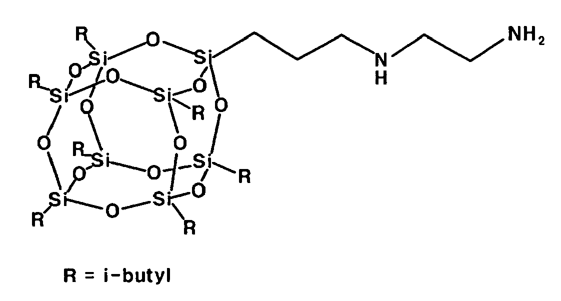

C₃₃H₇₆N₂O₁₂Si₈ (d)

Further, the present invention provides a technique for preparing a PET nanocomposite fiber, which comprises using a polymer of the above-described PET nanocomposite to prepare a polyethylene terephthalate nanocomposite chip with a content of the ethylene terephthalate unit of 85 mol% or more and an intrinsic viscosity in the range of 0.50 to 1.20, and then melt-spinning and stretching the composite chip.

The amount of the nanocompound to be added upon polymerization is preferably 1 to 5 % by weight, based on the total weight of the polymers.

Further, the present invention provides a process for preparation of a polyethylene terephthalate nanocomposite fiber comprising the steps of:
dispersing one organic/inorganic hybrid nanocompound selected from the group consisting of (a) C₅₆H₁₂₂O₁₂Si₇, (b) C₃₁H₇₁NO₁₂Si₈, (C) C₅₉H₁₂₇NO₁₂Si₈, and (d) C₃₃H₇₆N₂O₁₂Si₈ in ethylene glycol;
preparing the polyethylene terephthalate nanocomposite chip by polycondensation after esterification of an ethylene glycol dispersed the organic/inorganic hybrid nanocompound therein and a dimethyl terephthalate, wherein the nanocomposite chip have an ethylene terephthalate unit of 85 mol% or more and an intrinsic viscosity in the range of 0.50 to 1.20; and
melt spinning and stretching the polyethylene terephthalate nanocomposite chip.

According to the present invention, the nanocompound is preferably dispersed in ethylene glycol by means of an ultrasonic homogenizer.

Hereinbelow, the present invention will be further described in detail.

The present invention is directed to preparation of a polyethylene terephthalate nanocomposite and a nanocomposite fiber, which involves employing C₅₆H₁₂₂O₁₂Si₇, C₃₁H₇₁NO₁₂Si₈, C₅₉H₁₂₇NO₁₂Si₈ or C₃₃H₇₆N₂O₁₂Si₈, which are organic/inorganic hybrid nanocompounds with excellent heat resistance. In order to prepare the PET nanocomposite, a nanocompound with excellent thermal stability is added in amount of 1 to 5 % by weight to perform PET polymerization.

A PET can be prepared by a DMT method in which ethylene glycol (which is referred to 'EG', hereinafter) and dimethyl terephthalate (DMT) are subject to transesterification, and a TPA method in which EG and terephthalic acid (which is referred to 'TPA', hereinafter) are subject to esterification. As the polymerization method of the present invention, either of the TPA method or the DMT can be used, but preferred is a method in which dimethyl terephthalate (which is referred to 'DMT', hereinafter) and EG are used in a molar ratio of 1:2 *in situ* to prepare a polymer. The DMT has a higher solubility in EG than that of the TPA, which allows easier handling, and a higher reaction speed in the initial reaction for the ester, which allows a higher-purity polymer. Therefore, this method is commonly and preferably used in the laboratories and the pilot stages.

The organic/inorganic hybrid nanocompounds of the present invention are represented by the above-described structural formulae I(a) to I(d), and in the structural formulae, the R group may be an alkyl group. As the alkyl group, preferred is an isobutyl group or an isooctyl group. C₅₆H₁₂₂O₁₂Si₇, C₃₁H₇₁NO₁₂Si₈ (commercial name AM0265), C₅₉H₁₂₇NO₁₂Si₈ (commercial name AM0270)and C₃₃H₇₆N₂O₁₂Si₈ (commercial name AM0275), which are the nanocompounds particularly preferably used in the present invention, are directly purchased from Hybrid Plastics in the United States and used without further purification.

The organic/inorganic hybrid nanocompounds of the present invention have advantages such as excellent thermal stability, nanometer-scaled particle sizes (100 nm or less), and various reactivities due to their organic/inorganic functional group. Their thermal stability was confirmed by a thermogravimetic analyzer (which is referred to as TGA, hereinafter), and 5% or less of C₅₆H₁₂₂O₁₂Si₇ is decomposed, and 62%, 2%, and 21% of C₃₁H₇₁NO₁₂Si₈, C₅₉H₁₂₇NO₁₂Si₈ and C₃₃H₇₆N₂O₁₂Si₈ were decomposed, respectively, at 280°C of PET polycondensation temperature. Thus, they are thermally stable during a polymerization process, and they are reacted and dispersed in the PET, thereby affecting the physical properties.

In the conventional organo-treated nanoclays, most of the moieties organized at a high temperature are decomposed, thereby not affecting the physical properties. However, in the case of a molded article, it is noted that although most of the organized moieties are decomposed, the clays remain as they are, whereby improving the gas barrierability.

The organic/inorganic hybrid nanocompound of the present invention has a uniform particle size of 100 nm or less, contains both of the organic functional group and the inorganic functional group, and contains a number of the organic functional groups even at a high temperature, whereby it is reacted with a PET polymer and dispersed in the PET polymer, thus affecting the physical properties. It was found that it has significantly excellent reactivity and dispersity as compared with the conventional nanoclays having a size of 200 nm or more in size.

In preparation of a PET nanocomposite, the nanocompound is previously dispersed in EG, and then introduced. That is, for better dispersion, the nanocompound is dispersed using an ultrasonic homogenizer, and it was found that thus dispersed EG solution was entirely in the slightly unclear state due to the nanocompound.

The EG solution having the organic/inorganic hybrid nanocompound dispersed therein and DMT were put into a polymerization vessel at a molar ratio of 2:1. A manganese (Mn) catalyst was put for esterification, and the reaction was performed at 230°C for 5 hours to obtain methanol having a similar theoretical value. Thereafter, a TMP catalyst as a thermal stabilizing agent was slightly added, and then an antimony (Sb) catalyst was added to perform polycondensation in vacuo at 280°C for 2 hours to obtain a PET nanocomposite. It was found that the polycondensation time was shortened, as compared with pure PET. This is caused by the characteristics of the organic/inorganic hybrid nanocompound.

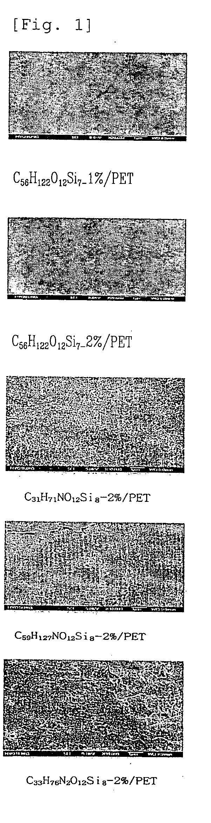

The PET nanocomposite obtained by addition of 2 % by weight of the organic/inorganic hybrid nanocompound, based on the total weight of the polymers was dried in vacuo at 70°C, no higher than a crystallization temperature for 24 hours, and the cross-section thereof was observed with a Scanning Electron Microscopy (which is referred to as SEM, hereinafter) for comparison of the particle sizes and dispersities. The powdered C₃₁H₇₁NO₁₂Si₈ and C₃₃H₇₆N₂O₁₂Si₈ have uniform sizes of around 50 to 80 nm, and it was found that they entirely have significantly good dispersities. C₅₆H₁₂₂O₁₂Si₇ and C₅₉H₁₂₇NO₁₂Si₈ of viscous liquid state have its nano-sized materials agglomerated, and thus, it was found agglomerate having a size of 100 to 200 nm (Fig. 1).

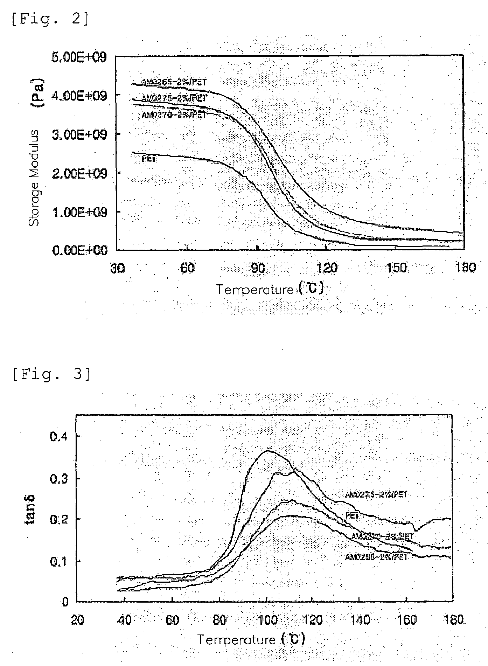

The polymer of the PET nanocomposite was dried in vacuo at 70°C for 24 hours, and then used with a Rheometer at 265°C for preparation of a fiber. This fiber was sufficiently stretched in an oil bath in a passive mode, washed with carbon tetrachloride, and then dried at normal temperature. The modulus according to the high temperature was measured through kinetic analysis, and as a result, the initial modulus was increased to around 2-fold in the case of adding 2 % by weight of the C₅₆H₁₂₂O₁₂Si₇, as compared with pure PET, and each modulus of the remaining three compounds was increased to around 2-fold or more, as shown in Fig. 2. Further, as shown in Fig. 3, the results were such that PET has a Tg, measured with a ratio of a storage modulus and a loss modulus, tanδ, of 101°C, while each of C₃₁H₇₁NO₁₂Si₈, C₅₉H₁₂₇NO₁₂Si₈ and C₃₃H₇₆N₂O₁₂Si₈ has a Tg of 112 to 113°C, with 10°C or higher being increased.

The thermal stability of organic/inorganic hybrid nanocompound of the present invention was evaluated in the following manner.

### Thermal stability of organic/inorganic hybrid nanocompound

Thermogravimetry Analysis (TGA) was performed to examine the thermal stability of the organic/inorganic hybrid nanocompound. Before the TGA analysis, all the samples were sufficiently dried in vacuum oven (40°C), and for TGA analysis, nitrogen gas was flowed at a temperature in the range from 30 to 800°C at a temperature raising rate of 10°C/min.

The organic/inorganic hybrid nanocompound of the present invention was examined on its decomposition tendency at a high temperature through TGA to confirm the thermal stability of the organic/inorganic hybrid nanocompound. The results confirmed that 5% or less of C₅₆H₁₂₂O₁₂Si₇ is decomposed, and 62%, 2%, and 21% of C₃₁H₇₁NO₁₂Si_{8,} C₅₉H₁₂₇NO₁₂Si₈ and C₃₃H₇₆N₂O₁₂Si₈ were decomposed, respectively, at 280°C. Thus, 95% or more, 38%, 98% and 79% of C₅₆H₁₂₂O₁₂Si₇, C₃₁H₇₁NO₁₂Si₈, C₅₉H₁₂₇NO₁₂Si₈ and C₃₃H₇₆N₂O₁₂Si₈, respectively, were maintained with addition during polymerization even at a PET polymerization temperature.

The amount thereof to be added was set at 2% by weight, based on the weight of the PET polymer, and they were sufficiently dispersed using an ultrasonic homogenizer. The result that the EG solution was slightly unclear confirmed that the compounds were well dispersed.

### EXAMPLES

### Preparation of PET nanocomposite

### <Example 1>

The EG solution having the organic/inorganic hybrid nanocompound dispersed therein and DMT were put into a polymerization vessel at a molar ratio of 2:1. A manganese (Mn) catalyst was put for esterification, and the reaction was performed at 230°C for 5 hours to obtain methanol having a similar theoretical value. Thereafter, a TMP catalyst as a thermal stabilizing agent was slightly added, and then an antimony (Sb) catalyst was added to perform polycondensation in vacuo at 280°C for 2 hours to obtain a PET nanocomposite. During PET polymerization, 1% by weight of C₅₆H₁₂₂O₁₂Si₇ of viscous liquid state was added, and the resultant was dried in vacuo at 70°C for 24 hours. The SEM cross-section was checked and the result is shown in Fig. 1.

### <Example 2>

During PET polymerization, 2% by weight of C₅₆H₁₂₂O₁₂Si₇ was added, and the resultant was dried in vacuo at 70°C for 24 hours. The SEM cross-section was checked and the result is shown in Fig. 1.

### <Examples 3 and 4>

During PET polymerization, 2% by weight of powdered C₃₁H₇₁NO₁₂Si₈, and C₃₃H₇₆N₂O₁₂Si₈ were each added, and the resultants were dried in vacuo at 70°C for 24 hours to prepare PET nanocomposites. The SEM cross-sections were checked and the results are shown in Fig. 1.

### <Example 5>

During PET polymerization, 2% by weight of C₅₉H₁₂₇NO₁₂Si₈ of viscous liquid state was added, and the resultants were dried in vacuo at 70°C for 24 hours to prepare a PET nanocomposite.

### <Comparative Example 1>

6% by weight of the organic/inorganic hybrid nanocompound of the present invention was added, and the resultant was dried in vacuo at 70°C for 24 hours to prepare a PET nanocomposite. The SEM cross-section was checked and the result is shown in Fig. 5.

### Preparation of PET nanocomposite fiber

### <Example 6>

During PET polymerization, 5% by weight of an organic/inorganic hybrid nano-material, C₅₆H₁₂₂O₁₂Si₇, C₃₁H₇₁NO₁₂Si_{8,} C₅₉H₁₂₇NO₁₂Si₈ and C₃₃H₇₆N₂O₁₂Si₈, was each added in the polymerization step, to prepare a polyethylene terephthalate nanocomposite chip having an intrinsic viscosity of 0.7. The composite chip was dried in vacuo at 70°C for 24 hours, and then spinned and stretched using a Rheometer at 265°C to prepare a fiber. The kinetics of the prepared fiber was analyzed.

### <Examples 7 to 10>

According to the processes for preparation of the PET nanocomposites of Examples 1 to 4, the same procedure as in Example 6 was carried out to prepare a polyethylene terephthalate nanocomposite chip having an intrinsic viscosity of 0.7. The composite chip was dried in vacuo at 70°C for 24 hours, and then spinned and stretched using a Rheometer at 265°C to prepare a fiber. The kinetics of the prepared fiber was analyzed.

### <Example 11>

Using the PET nanocomposite of Example 5, the same procedure as in Example 6 was carried out to prepare a polyethylene terephthalate nanocomposite chip having an intrinsic viscosity of 0.7. The composite chip was dried in vacuo at 70°C for 24 hours, and then spinned and stretched using a Rheometer at 265°C to prepare a fiber. The kinetics of the prepared fiber was analyzed.

### Comparative Example

### <Comparative Example 2>

A PET polymer (IV = 0.7) without addition of the nanocompound of the present invention was prepared, and the polymer was dried in vacuo at 70°C for 24 hours, and then spinned and stretched using a Rheometer at 265°C to prepare a fiber. The kinetics of the prepared fiber was analyzed.

In the preparation of the PET nanocomposite, in Examples 3 and 4 in which 2 % by weight of the organic/inorganic hybrid nanocompound was added, it was found that the particle size was uniform and in the range of around 50 to 80 nm, and entirely, the dispersity was significantly good. To the contrary, in Comparative Example 1 in which a relatively large amount, 6% by weight of the organic/inorganic hybrid nanocompound was added, it was found that the nanocompounds agglomerate with each other, and thus some agglomerates having a size of 100 nm or more were observed (Fig. 5).

In Examples 9 and 10 for preparation of PET nanocomposite fiber, the nanocompound has a uniform distribution with a size of about 50 to 80 nm, and the dispersity was entirely good. In Examples 6 to 8 and 11, it was found that the size was large, and the dispersity was also deteriorated, due to the agglomeration between the nanocompounds. However, it was found that both of the initial modulus, and Tg, reduction in modulus at a temperature as high as 80°C or higher were improved for the added nanocompounds.

### Effects of the Invention

As described above, C₅₆H₁₂₂O₁₂Si₇, C₃₁H₇₁NO₁₂Si₈, C₅₉H₁₂₇NO₁₂Si₈, C₃₃H₇₆N₂O₁₂Si₈, each of which is the nanocompound used in the present invention, can be added to a polyethylene terephthalate fiber, to improve the initial modulus and the high-temperature modulus of the fiber.

While particular embodiments of the present invention have been illustrated and described, it would be obvious to those skilled in the art that various other changes and modifications can made without departing from the spirit of the present invention. It is therefore intended to cover in the appended claims all such changes which fall within the scope of the present invention.

## Claims

1. A polyethylene terephthalate nanocomposite containing 85 mol% or more of an ethylene terephthalate unit, comprising one organic/inorganic hybrid nanocompound selected from the group consisting of (a) C₅₆H₁₂₂O₁₂Si₇, (b) C₃₁H₇₁NO₁₂Si₈, (C) C₅₉H₁₂₇NO₁₂Si₈, and (d) C₃₃H₇₆N₂O₁₂Si₈, represented by the following structural formulae I(a) to I(d) : 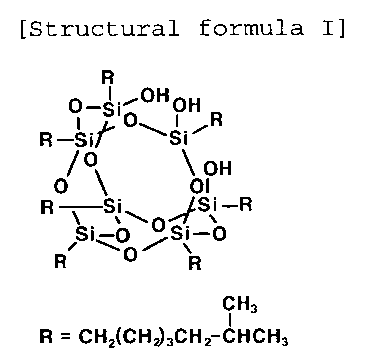
C₅₆H₁₂₂O₁₂Si₇ (a) 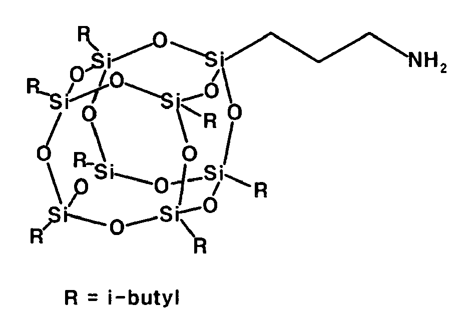
C₃₁H₇₁NO₁₂Si₈ (b) 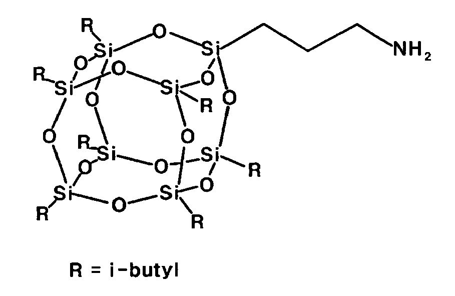
C₅₉H₁₂₇NO₁₂Si₈ (c) 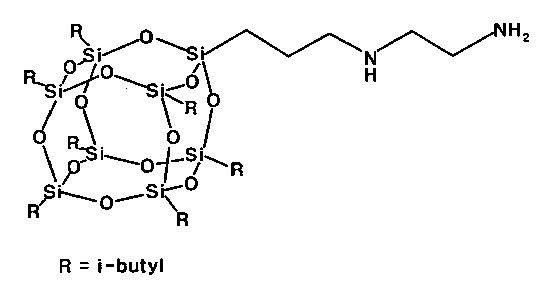
C₃₃H₇₆N₂O₁₂Si₈ (d)

2. A polyethylene terephthalate nanocomposite fiber prepared by melt-spinning and stretching a polyethylene terephthalate nanocomposite chip in which the nanocomposite chip have an ethylene terephthalate unit of 85 mol% or more and an intrinsic viscosity in the range of 0.50 to 1.20, the nanocomposite chip comprising one organic/inorganic hybrid nanocompound selected from the group consisting of (a) C₅₆H₁₂₂O₁₂Si₇, (b) C₃₁H₇₁NO₁₂Si₈, (c) C₅₉H₁₂₇NO₁₂Si₈, and (d) C₃₃H₇₆N₂O₁₂Si₈, represented by the following structural formulae I(a) to I(d): 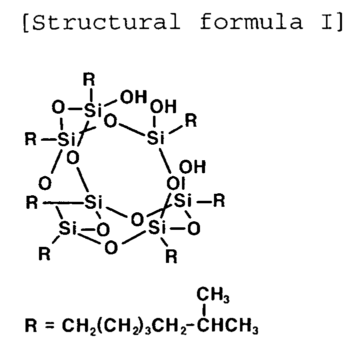
C₅₆H₁₂₂O₁₂Si₇ (a) 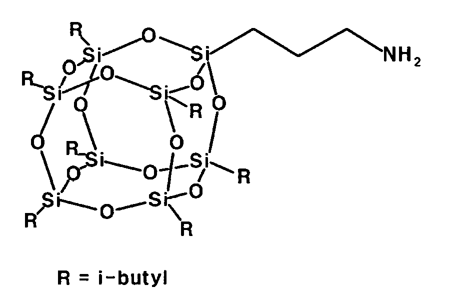
C₃₁H₇₁NO₁₂Si₈ (b) 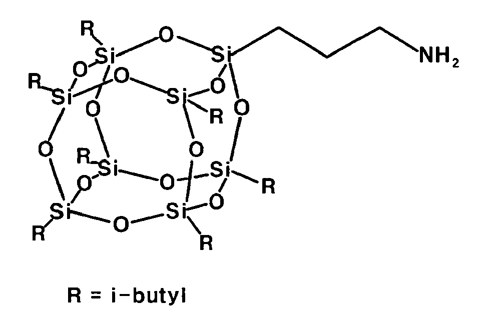
C₅₉H₁₂₇NO₁₂Si₈ (c) 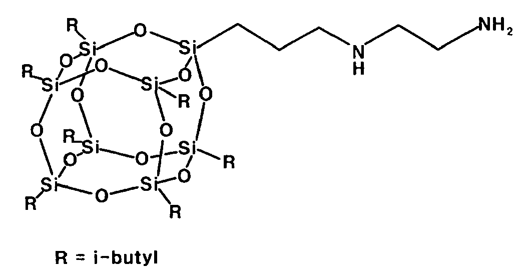
C₃₃H₇₆N₂O₁₂Si₈ (d)

3. The polyethylene terephthalate nanocomposite fiber according to claim 2, wherein 1 to 5 % by weight of the organic/inorganic hybrid nanocompound is contained, based on the total weight of the polymers.

4. A process for preparation of a polyethylene terephthalate nanocomposite fiber comprising the steps of:
dispersing an organic/inorganic hybrid nanocompound selected from the group consisting of (a) C₅₆H₁₂₂O₁₂Si₇, (b) C₃₁H₇₁NO₁₂Si₈, (c) C₅₉H₁₂₇NO₁₂Si₈, and (d) C₃₃H₇₆N₂O₁₂Si₈ in ethylene glycol;
preparing the polyethylene terephthalate nanocomposite chip by polycondensation after esterification of an ethylene glycol dispersed the organic/inorganic hybrid nanocompound therein and a dimethyl terephthalate, wherein the nanocomposite chip have an ethylene terephthalate unit of 85 mol% or more and an intrinsic viscosity in the range of 0.50 to 1.20; and
melt spinning and stretching the polyethylene terephthalate nanocomposite chip.

5. The process for preparation of a polyethylene terephthalate nanocomposite fiber according to claim 4, wherein the organic/inorganic hybrid nanocompound is dispersed in ethylene glycol using an ultrasonic homogenizer.
